# EUROPEAN PATENT SPECIFICATION

(11) **EP 2 028 021 B1**
(45) Date of publication and mention of the grant of the patent: **04.08.2010**
(21) Application number: 08162251.6
(22) Date of filing: 12.08.2008
(51) Int. Cl.: B60C 1/00, C08K 5/00, C08L 7/00, C08L 9/00

(54) **Tire with component having combination plasticizer**
Reifen mit Komponente mit Kombinationsweichmacher
Pneu avec composant disposant d'une combinaison de plastifiants

(30) Priority: 16.08.2007 US 839564
(43) Date of publication of application: 25.02.2009
(73) Proprietor: The Goodyear Tire & Rubber Company, Akron, OH 44316-0001 (US)
(72) Inventor: Lippello, III, Thomas Charles, Fairlawn, OH 44333 (US); Hubbell, Joseph Kevin, Akron, OH 44313 (US); Sandstrom, Paul Harry, Cuyahoga Falls, OH 44223 (US); Jones, Bryce Alan, Norton, OH 44203 (US)
(74) Representative: Kutsch, Bernd

(56) References cited:
- WO-A-2007/026707
- JP-A- 10 324 864
- JP-A- 2005 350 535
- KR-A- 20030 092 670
- US-A- 5 284 907
- US-A1- 2003 080 618
- US-A1- 2003 220 428
- US-A1- 2004 072 934

## Description

### Background of the Invention

There has been an increasing demand to develop tires with a high level of vehicle handling performance, good stability and steering response when changing lanes, avoiding obstacles on the road and cornering. Improved road grip without compromising stability is critical for vehicles traveling at high speed. However, higher tire operating temperatures are encountered at high speeds than are experienced during normal driving and the hot rubber in the tire becomes more pliable which reduces the handling stability of the tire, a so-called "borderline" use of said tire.

A widely adopted method to improve handling stability, particularly road gripping properties, is to increase the hysteresis loss of tread rubber compositions. A large hysteresis loss during the deformation of tread is used for increasing a friction force between the tread and road surface. However, a significant increase of heat buildup will occur during the running of the tires as the hysteresis loss of the tread rubber becomes large, causing wear resistance of the tread rubber to deteriorate rapidly. On the other hand, it is believed that vehicle controllability is significantly influenced by hardness (which is closely related to cornering stiffness of a tire) and breaking strength of rubber compositions. In order to enhance controllability, especially steering response, it is necessary to increase the stiffness of the tire compound in general and the tread in particular, which in most cases results in lower hysteresis loss. Therefore, it is very difficult to achieve both of these desired properties by conventional compounding techniques.

JP-A- 2005/350535, WO-A- 2007/026707, US-A-, 5,284,907, US-A-2003/080,681, US-A- 2003/220,428 and US-A- 2004/072,934 describe various rubber compositions and tires made with such rubber compositions comprising diene based elastomers and plasticizers.

### Summary of the invention

The present invention is directed to a pneumatic tire according to claim 1.

Dependent claims refer to preferred embodiments of the invention.

### Detailed Description of the invention

There is disclosed a pneumatic tire comprising at least one component, the at least one component comprising a rubber composition, the rubber composition comprising at least one diene based elastomer and a combination plasticizer comprising a polyester phthalate and dibutoxy ethyl adipate.

In one embodiment, the polyester phthalate plasticizier is Plasthall P-900 from Hallstar Company.

In one embodiment, the dibutoxy ethyl adipate plasticizer is Plasthall DBEA from Hallstar Company.

In one embodiment, the combination plasticizer is present in the rubber composition in a concentration ranging from 1 to 20 parts by weight per 100 parts by weight of diene based elastomer (phr). In another embodiment, the combination plasticizer is present in the rubber composition in a concentration ranging from 5 to 15 parts by weight per 100 parts by weight of diene based elastomer (phr), alternatively 7 to 12 phr.

In one embodiment, the weight ratio of the polyester phthalate to the dibutoxy ethyl adipate ranges from 10:1 to 1:10. In one embodiement, the weight ratio of polyester phthalate to dibutoxy ethyl adipate ranges from 5:1 to 1:5, such as from 2:1 to 1:2.

The rubber composition may be used with rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are natural or synthetic polyisoprene, polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also from 10 to 100 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 100 phr of silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2 and VN3, etc.

Commonly employed carbon blacks can be used in an amount ranging from 10 to 100 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used at a concentration of 1 to 30 phr in the rubber composition including, but not limited to, particulate fillers including ultra high molecular weight polyethylene (UHMWPE), particulate polymer gels including but not limited to those disclosed in US-A- 6,242,534; US-A- 6,207,757; US-A-6,133,364; US-A- 6,372,857; US-A- 5,395,891; or US-A- 6,127,488, and plasticized starch composite filler including that disclosed in US-A- 5,672,639.

In one embodiment the rubber composition may contain a conventional sulfur containing organosilicon compound. Examples of suitable sulfur containing organosilicon compounds are of the formula:

Z-Alk-Sₙ-Alk-Z I

in which Z is selected from the group consisting of 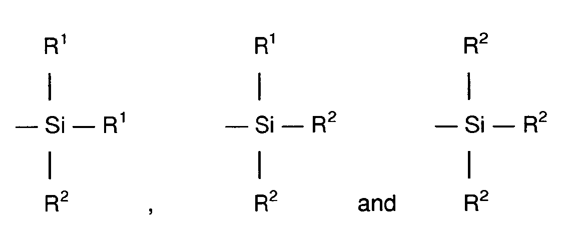 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 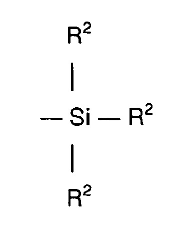 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Advanced Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as resins including tackifying resins, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr and representative antioxidant may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road, truck tire, and the like. In one embodiment, the tire is a race tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Example 1

In this example, the effect of adding a combination plasticizer (polyester phthalate and dibutoxy ethyl adipate) to a rubber composition is illustrated. Rubber compositions containing diene based elastomer, fillers, process aids, antidegradants, and curatives were prepared following recipes as shown in Tables 1 and 2.

The samples were tested for viscoelastic properties using RPA. "RPA" refers to a Rubber Process Analyzer as RPA 2000™ instrument by Alpha Technologies, formerly the Flexsys Company and formerly the Monsanto Company. References to an RPA 2000 instrument may be found in the following publications: H. A. Palowski, et al, Rubber World, June 1992 and January 1997, as well as Rubber & Plastics News, April 26 and May 10, 1993.

The "RPA" test results in Table 3 are reported as being from data obtained at 100°C in a dynamic shear mode at a frequency of 1 Hertz and at the reported dynamic strain values. Tensile and hardness properties were also measured and reported in Table 3.

**Table 1**

| | |
|---|---|
| Natural Rubber | 90 |
| Polybutadiene ¹ | 10 |
| Resins ² | 6 |
| Antidegradants ³ | 2 |
| Carbon Black | 43 |
| Silica | 22 |
| Aromatic OII | 92 |
| Coupling Agent ⁴ | 2 |
| Zinc Oxide | 3 |
| Sulfur | 2 |
| Accelerator | 3.3 |
| Plasticizers | variable as per Table 2 |

| | |
|---|---|
| ¹ Budene 1208 from The Goodyear Tire & Rubber Company ² Combination of alkylphenol/formaldehyde and rosin acid tackifiers ³Amine and quinoline types ⁴50% Si69 and 50% carbon black from Degussa | |

**Table 2**

| **Sample No.** | **1 (Comparative Sample)** | **2** | **3** | **4** | **5** |
|---|---|---|---|---|---|
| Dibutoxy ethyl adipate ⁵ | 13 | 12 | 10 | 8 | 3 |
| Polyester phthalate ⁶ | 0 | 1 | 3 | 5 | 10 |

| | | | | | |
|---|---|---|---|---|---|
| ⁵ Dibutoxy ethyl adipate as Plasthall DBEA from Hallstar Co. ⁶ Polyester phthalate as Plasthall P-900 from Hallstar Co. | | | | | |

**Table 3**

| **Sample No.** | **1 (Comparative Sample)** | **2** | **3** | **4** | **5** |
|---|---|---|---|---|---|
| **RPA, 100°C, 1 Hz** | | | | | |
| G', 1 % strain (MPa) | 0.392 | 0.402 | 0.393 | 0.417 | 0.463 |
| G', 10% strain (MPa) | 0.271 | 0.276 | 0.273 | 0.294 | 0.312 |
| G', 50% strain (MPa) | 0.203 | 0.207 | 0.203 | 0.222 | 0.225 |
| tan delta, 10% strain | 0.116 | 0.116 | 0.116 | 0.111 | 0.122 |
| Shore A Hardness 23°C | 26 | 26 | 27 | 27 | 29 |
| Rebound, 100°C | 68 | 66 | 67 | 66 | 66 |

| **Ring Modulus, 23°C** | | | | | |
|---|---|---|---|---|---|
| Tensile Strength, MPa | 10.1 | 10.1 | 10.3 | 10.5 | 9.5 |
| Elongations at break, % | 700 | 712 | 720 | 713 | 697 |
| Modulus 100%, MPa | 0.45 | 0.44 | 0.45 | 0.46 | 0.48 |
| Modulus 300%, MPa | 1.95 | 1.90 | 1.89 | 1.98 | 1.91 |

### Example 2

In this example, the effect of adding polyester phthalate plasticizer (without dibutoxy ethyl adipate) to a rubber composition is illustrated. Rubber compositions containing diene based elastomer, fillers, process aids, antidegradants, and curatives were prepared following recipes as shown in Tables 4 and 5. Viscoelastic properties and physical properties were measured as described in Example 1, with results given in Table 6.

**Table 4**

| | |
|---|---|
| Natural Rubber | 58 |
| Polybutadiene ¹ | 8 |
| Solution SBR ² | 46.75 |
| Resin ³ | 3 |
| Antidegradants ⁴ | 2 |
| Carbon Black | 46.5 |
| Silica | 17.5 |
| Aromatic Oil | 77 |
| Coupling Agent ⁵ | 5 |
| Zinc Oxide | 3 |
| Stearic Acid | 2 |
| SulfurA | 2.5 |
| Accelerators | 2.8 |
| Retarder | 0.1 |
| Plasticizer | variable as per Table 2 |

| | |
|---|---|
| ¹ Budene 1208 from The Goodyear Tire & Rubber Company ² SLF31 X22, solution polymerized styrene butadiene rubber with 31 percent styrene, extended with 37.5 phr aromatic oil, from The Goodyear Tire & Rubber Company ² Rosin acid tackifier ³ Amine and quinoline types ⁴ 50% Si69 and 50% carbon black from Degussa | |

**Table 5**

| **Sample No.** | **6** | **7** | **8** | **9** |
|---|---|---|---|---|
| Polyester phthalate ⁵ | 1 | 2 | 5 | 10 |

| | | | | |
|---|---|---|---|---|
| ⁵ Polyester phthalate as Plasthall P-900 from Hallstar Co. | | | | |

**Table 6**

| **Sample No.** | **6** | **7** | **8** | **9** |
|---|---|---|---|---|
| **RPA, 100°C, 1 Hz** | | | | |
| G', 1% strain (MPa) | 0.677 | 0.676 | 0.619 | 0.680 |
| G', 10% strain (MPa) | 0.486 | 0.479 | 0.437 | 0.440 |
| G', 50% strain (MPa) | 0.384 | 0.379 | 0.330 | 0.276 |
| tan delta, 10% strain | 0.083 | 0.086 | 0.098 | 0.12 |
| Shore A Hardness 23°C | 46 | 45 | 44 | 44 |
| Rebound, 100°C | 65 | 65 | 64 | 62 |

| **Ring Modulus, 23°C** | | | | |
|---|---|---|---|---|
| Tensile Strength, MPa | 11.6 | 11.7 | 10.8 | 11.1 |
| Elongation at break, % | 602 | 609 | 610 | 657 |
| Modulus 100%, MPa | 0.85 | 0.83 | 0.8 | 0.69 |
| Modulus 300%, MPa | 4.42 | 4.36 | 4.03 | 3.54 |

As seen by comparing the data of Tables 3 and 6, the use of the combination plasticizer (polyester phthalate and dibutoxy ethyl adipate) in a rubber compound leads to an unexpected and superior performance as compared with a rubber compound containing only the polyester phthalate. For Samples 2 through 5, use of the combination plasticizer results in an increasing G', indicative of improved handling, with a surprisingly modest increase in hysteris as indicating by tan delta. Further, the 300% modulus shows little or no change for these samples, indicating no compromise in durability. By contrast, Samples 6 through 9 containing only the polyester phthalate (and no dibutoxy ethyl adipate) showed no increase in G', a significant increase in hysteresis as indicated by tan delta, and a significant decrease in 300 percent modulus.

## Claims

1. A pneumatic tire comprising at least one component, the at least one component comprising a rubber composition, the rubber composition comprising at least one diene based elastomer and a combination plasticizer comprising a polyester phthalate and dibutoxy ethyl adipate.

2. The pneumatic tire of claim 1, wherein the combination plasticizer is present in the rubber composition in a concentration ranging from 1 to 20 parts by weight, per 100 part by weight of elastomer (phr).

3. The pneumatic tire of claim 2, wherein the combination plasticizer is present in the rubber composition in a concentration ranging from 5 to 15 parts by weight, per 100 part by weight of elastomer (phr).

4. The pneumatic tire of at least one of the previous claims, wherein the weight ratio of polyester phthalate to dibutoxy ethyl adipate ranges from 10:1 to 1:10.

5. The pneumatic tire of claim 4, wherein the weight ratio of polyester phthalate to dibutoxy ethyl adipate ranges from 5:1 to 1:5.

6. The pneumatic tire of at least one of the previous claims, wherein the diene based elastomer is selected from the group consisting of cis 1,4polyisoprene rubber (natural or synthetic), 3,4-polyisoprene rubber, styrene/isoprene/butadiene rubber, emulsion or solution polymerization derived styrene/butadiene rubbers, cis 1,4-polybutadiene rubbers and emulsion polymerization prepared butadiene/acrylonitrile copolymers.

7. The pneumatic tire of at least one of the previous claims, wherein the rubber composition further comprises from 10 to 100 phr of carbon black.

8. The pneumatic tire of at least one of the previous claims, wherein the rubber composition further comprises from 10 to 100 phr of silica.

9. The pneumatic tire of at least one of the previous claims, wherein the rubber composition comprises a sulfur containing organosilicon compound.

10. The pneumatic tire of at least one of the previous claims, wherein the rubber composition comprises from 10 to 100 phr of carbon black and from 10 to 100 phr of silica.

11. The pneumatic tire of at least one of the previous claims, wherein the rubber composition comprises 10 to 100 phr of a process oil.

12. The pneumatic tire of at least one of the previous claims, wherein the rubber composition comprises from 10 to 100 phr of a process oil selected from the group consisting of aromatic, paraffinic, naphthenic, vegetable, MES, TDAE, SRAE and heavy naphthenic oils.

13. The pneumatic tire of at least one of the previous claims, wherein the at least one component comprises a tread.

## Patentansprüche

1. Luftreifen, umfassend mindestens eine Komponente, wobei die mindestens eine Komponente eine Kautschukzusammensetzung umfasst, wobei die Kautschukzusammensetzung mindestens ein dienbasiertes Elastomer und einen Kombinationsweichmacher umfasst, der ein Polyesterphthalat und Dibutoxyethyladipat umfasst.

2. Luftreifen nach Anspruch 1, wobei der Kombinationsweichmacher in der Kautschukzusammensetzung in einer Konzentration vorliegt, die sich auf 1 bis 20 Gewichtsteile je 100 Gewichtsteile Elastomer (ThK) beläuft.

3. Luftreifen nach Anspruch 2, wobei der Kombinationsweichmacher in der Kautschukzusammensetzung in einer Konzentration vorliegt, die sich auf 5 bis 15 Gewichtsteile je 100 Gewichtsteile Elastomer (ThK) beläuft.

4. Luftreifen nach mindestens einem der vorgenannten Ansprüche, wobei sich das Gewichtsverhältnis von Polyesterphthalat zu Dibutoxyethyladipat von 10:1 bis auf 1:10 beläuft.

5. Luftreifen nach Anspruch 4, wobei sich das Gewichtsverhältnis von Polyesterphthalat zu Dibutoxyethyladipat von 5:1 bis auf 1:5 beläuft.

6. Luftreifen nach mindestens einem der vorgenannten Ansprüche, wobei das dienbasierte Elastomer aus der aus cis-1,4-Polyisoprenkautschuk (natürlich oder synthetisch), 3,4-Polyisoprenkautschuk, Styrol-Isopren-Butadien-Kautschuk, durch Emulsions- oder Lösungspolymerisation gewonnenen Styrol-Butadien-Kautschuken, cis-1,4-Polybutadienkautschuken und durch Emulsionspolymerisation hergestellten Butadien-Acrylnitril-Copolymeren bestehenden Gruppe ausgewählt ist.

7. Luftreifen nach mindestens einem der vorgenannten Ansprüche, wobei die Kautschukzusammensetzung weiter 10 bis 100 ThK Carbon Black umfasst.

8. Luftreifen nach mindestens einem der vorgenannten Ansprüche, wobei die Kautschukzusammensetzung weiter 10 bis 100 ThK Silika umfasst.

9. Luftreifen nach mindestens einem der vorgenannten Ansprüche, wobei die Kautschukzusammensetzung eine schwefelhaltige Organosiliziumverbindung umfasst.

10. Luftreifen nach mindestens einem der vorgenannten Ansprüche, wobei die Kautschukzusammensetzung 10 bis 100 ThK Carbon Black und 10 bis 100 ThK Silika umfasst.

11. Luftreifen nach mindestens einem der vorgenannten Ansprüche, wobei die Kautschukzusammensetzung 10 bis 100 ThK eines Prozessöls umfasst.

12. Luftreifen nach mindestens einem der vorgenannten Ansprüche, wobei die Kautschukzusammensetzung 10 bis 100 ThK eines Prozessöls umfasst, ausgewählt aus der aus aromatischen, paraffinischen, naphthenischen, pflanzlichen, MES-, TDAE-, SRAE- und schweren naphthenischen Ölen bestehenden Gruppe.

13. Luftreifen nach mindestens einem der vorgenannten Ansprüche, wobei die mindestens eine Komponente eine Lauffläche umfasst.

## Revendications

1. Bandage pneumatique comprenant au moins un composant, ledit au moins un composant comprenant une composition de caoutchouc, la composition de caoutchouc comprenant au moins un élastomère à base diénique et un plastifiant en combinaison comprenant un phtalate de polyester et un adipate de dibutoxyéthyle.

2. Bandage pneumatique selon la revendication 1, dans lequel le plastifiant en combinaison est présent dans la composition de caoutchouc en une concentration dans la plage de 1 à 20 parties en poids, par 100 parties en poids d'élastomère (phr).

3. Bandage pneumatique selon la revendication 2, dans lequel le plastifiant en combinaison est présent dans la composition de caoutchouc en une concentration dans la plage de 5 à 15 parties en poids, par 100 parties en poids d'élastomère (phr).

4. Bandage pneumatique selon au moins une des revendications précédentes, dans lequel le rapport pondéral du phtalate de polyester à l'adipate de dibutoxyéthyle se situe dans la plage de 10:1 à 1:10.

5. Bandage pneumatique selon la revendication 4, dans lequel le rapport pondéral du phtalate de polyester à l'adipate de dibutoxyéthyle se situe dans la plage de 5:1 à 1:5.

6. Bandage pneumatique selon au moins une des revendications précédentes, dans lequel l'élastomère à base diénique est choisi parmi le groupe constitué par le caoutchouc de cis 1,4-polyisoprène (naturel ou synthétique), le caoutchouc de 3,4-polyisoprène, le caoutchouc de styrène/isoprène/butadiène, des caoutchoucs de styrène/butadiène dérivés d'une polymérisation en émulsion ou en solution, des caoutchoucs de cis 1,4-polybutadiène, et des copolymères de butadiène/acrylonitrile préparés par polymérisation en émulsion.

7. Bandage pneumatique selon au moins une des revendications précédentes, dans lequel la composition de caoutchouc comprend en outre du noir de carbone à concurrence de 10 à 100 phr.

8. Bandage pneumatique selon au moins une des revendications précédentes, dans lequel la composition de caoutchouc comprend en outre de la silice à concurrence de 10 à 100 phr.

9. Bandage pneumatique selon au moins une des revendications précédentes, dans lequel la composition de caoutchouc comprend un composé d'organosilicium contenant de soufre.

10. Bandage pneumatique selon au moins une des revendications précédentes, dans lequel la composition de caoutchouc comprend du noir de carbone à concurrence de 10 à 100 phr et de la silice à concurrence de 10 à 100 phr.

11. Bandage pneumatique selon au moins une des revendications précédentes, dans lequel la composition de caoutchouc comprend une huile plastifiante à concurrence de 10 à 100 phr.

12. Bandage pneumatique selon au moins une des revendications précédentes, dans lequel la composition de caoutchouc comprend une huile plastifiante à concurrence de 10 à 100 phr, choisie parmi le groupe constitué par des huiles aromatiques, des huiles paraffiniques, des huiles naphténiques, des huiles végétales, des huiles MES, TDAE, SRAE et des huiles naphténiques.

13. Bandage pneumatique selon au moins une des revendications précédentes, dans lequel ledit au moins un composant comprend une bande de roulement.
